# EUROPEAN PATENT APPLICATION

(11) **EP 4 501 466 A1**
(43) Date of publication of application: **05.02.2025**
(21) Application number: 22935712.4
(22) Date of filing: 14.12.2022
(51) Int. Cl.: B05C 5/02

(54) **SLIT DIE**

(30) Priority: 30.03.2022 JP 2022057234
(71) Applicant: Toray Engineering Co., Ltd., Tokyo 103-0028 (JP)
(72) Inventor: MAEDA, Kazunori, Otsu-shi, Shiga 520-2141 (JP); WATANABE, Atsushi, Otsu-shi, Shiga 520-2141 (JP)
(74) Representative: Global IP Europe Patentanwaltskanzlei
(86) International application number: PCT/JP2022/046001
(87) International publication number: WO 2023/188584

(57) **Abstract**

To provide a slit die that can make a width-direction shape of a coating film more uniform compared to conventional methods, when the coating film is formed in a stripe pattern in the width direction. A slit die is configured to apply a coating liquid on a substrate, the slit die comprising a manifold that is formed elongated in a width direction of the substrate and is a space that is configured to hold the coating liquid, a plurality of supply ports that are provided in the manifold so as to be arranged in the width direction and are configured to supply the coating liquid to the manifold, a slit that is connected to the manifold and is elongated in the width direction, a discharge port that is configured to discharge the coating liquid from the manifold via the slit, a shim that partitions the slit into a plurality of spaces in the width direction and forms small slits, and a partition portion that partitions the manifold into a plurality of spaces in the width direction and forms small manifolds, the partition portion being disposed at a position that partitions the manifold such that at least one of the supply ports is located in each small manifold, and one of the small manifolds connects to one of the small slits.

## Description

### [TECHNICAL FIELD]

The present invention relates to a slit die for applying a coating liquid on a substrate.

### [BACKGROUND ART]

Conventionally, battery electrode plates are manufactured by coating and drying a surface of a substrate, such as aluminum foil or copper foil, with a slurry (hereinafter referred to as coating liquid) obtained by mixing an active material, a binder, and a conductive assistant, in a solvent.

A coating device in this manufacturing process continuously transports a substrate using a roll-to-roll method and causes a slit die to discharge a coating liquid, thereby applying the coating liquid on the substrate and forming a coating film (for example, Patent Document 1). Application methods include single-line coating, where the coating liquid is applied in a wide strip across the width direction of the substrate, and multi-line coating (hereinafter referred to as stripe coating) where the coating liquid is applied in a stripe pattern across the width direction of the substrate.

### [PRIOR ART DOCUMENT]

### [PATENT DOCUMENTS]

[Patent Document 1] Japanese Laid-Open Patent Application Publication No. 2022-041501

### [SUMMARY OF THE INVENTION]

### [PROBLEM TO BE SOLVED BY THE INVENTION]

However, in a conventional slit die, there are cases in which the width-direction shape of the coating film is not uniform, when the coating film is formed in a stripe pattern in the width direction.

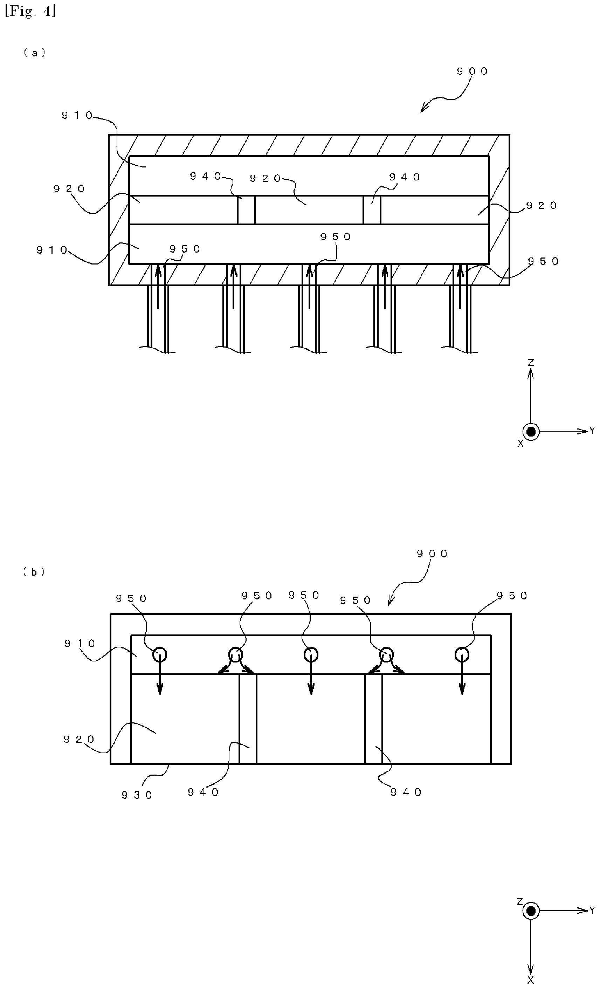

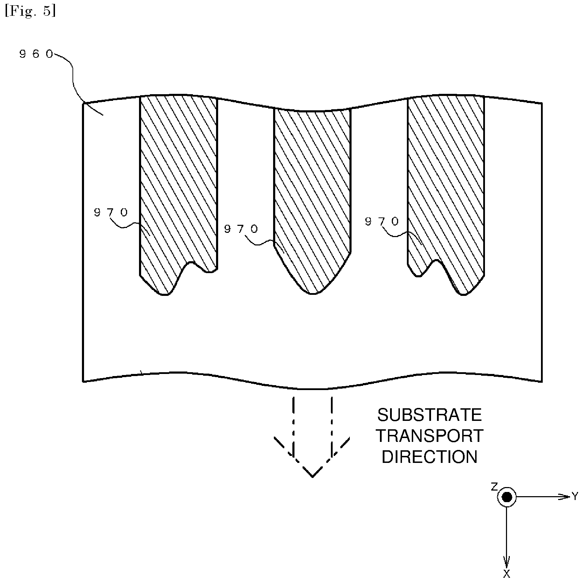

A conventional slit die is formed elongated in the width direction (hereinafter referred to as the width direction) of a substrate 960 (refer to Figure 5), as shown in Figures 4(a) and 4(b), and comprises a manifold 910, which is a space that holds a coating liquid, supply ports 950, a plurality of which are formed in the manifold 910 so as to be arranged in the width direction and supply the coating liquid to the manifold 910, a slit 920 connected to the manifold 910 and that is elongated in the width direction, and a discharge port 930 that discharges the coating liquid from the manifold 910 via the slit 920. In general, in order to carry out stripe coating with this slit die 900, a shim 940 that partitions the slit 920 into a plurality of spaces in the width direction is provided in the slit 920, as shown in Figures 4(a) and 4(b), and the shim 940 partitions the slit 920 in the width direction, thereby applying the coating liquid on the substrate 960 in a stripe pattern in the width direction.

In such a slit die 900, coating liquid that is supplied to the manifold 910 from each of the plurality of supply ports 950 flows into each of the spaces of the slit 920 partitioned by the shim 940 and is discharged from the discharge port 930. Here, as shown in Figure 4(b), the coating liquid supplied from the supply port 950 located near the shim 940, among the plurality of supply ports 950, flows in the width direction while avoiding where the shim 940 is located. This coating liquid collides, inside the manifold 910, with coating liquid that is supplied from the other supply ports 950 and that flows toward each of the adjacent spaces of the slit 920. This leads to a change in the direction of flow of the coating liquid that is supplied from each of the supply ports 950 and flows toward the slit 920 via the manifold 910, causing variation in the amount of coating liquid that flows into each of the spaces in the slit 920 partitioned by the shim 940.

As a result, when the coating liquid that has flowed into each of the spaces of the slit 920 partitioned by the shim 940 is discharged from the discharge port 930 and forms a coating film 970 on the substrate 960, variation occurs in the shape of the coating film 970 in the width direction, as shown in Figure 5.

In view of the problem described above, an object of the present invention is to provide a slit die that can make the width-direction shape of the coating film more uniform compared to conventional methods, when the coating film is formed in a stripe pattern in the width direction.

### [MEANS TO SOLVE THE PROBLEM]

A slit die of the present invention for solving the problem described above is a slit die configured to apply a coating liquid on a substrate, the slit die comprising a manifold that is formed elongated in a width direction of the substrate and is a space that is configured to hold the coating liquid, a plurality of supply ports that are provided in the manifold so as to be arranged in the width direction and are configured to supply the coating liquid to the manifold, a slit that is connected to the manifold and is elongated in the width direction, a discharge port that is configured to discharge the coating liquid from the manifold via the slit, a shim that partitions the slit into a plurality of spaces in the width direction and forms small slits, and a partition portion that partitions the manifold into a plurality of spaces in the width direction and forms small manifolds, the partition portion being disposed at a position that partitions the manifold such that at least one of the supply ports is located in each small manifold, and one of the small manifolds connects to one of the small slits.

The slit die described above has a partition portion, and this partition portion partitions the manifold in the width direction of the substrate such that one small manifold connects to one small slit, thereby preventing the coating liquid from moving between adjacent small manifolds, so that it is possible to suppress collisions of the coating liquid in the manifold. As a result, the coating liquid flows into each small slit from each small manifold so as to be uniform in the width direction of the substrate, and is discharged from the discharge port. As a result, it is possible to suppress the variation, in the width direction of the substrate, in the coating liquid that is discharged from the discharge port via each small slit. Accordingly, it is possible to make the width-direction shape of the coating film more uniform compared to conventional methods, when the coating film is formed in a stripe pattern in the width direction.

In addition, the partition portion may be formed so as to form a communication portion that connects, in the width direction, each of the small manifolds that are adjacent to each other, and the communication portion may be formed such that pressure loss experienced by the coating liquid, which is supplied from the supply ports to each of the small manifolds, when flowing from the small manifolds to the adjacent small manifolds via the communication portion is greater than the pressure loss experienced by the coating liquid when flowing from the small manifolds to the discharge port via the small slits.

In addition, at least one of the small manifolds may be provided with an exhaust means for exhausting air that is present in the manifold.

According to these configurations, it is possible to exhaust air from each of the small manifolds via the communication portion formed by the partition portion, while suppressing the coating liquid from moving between adjacent manifolds.

Additionally, the manifold may be provided with a plurality of partition attaching portions for attaching the partition portion, and the partition portion may be formed so as to be detachable with respect to each of the partition attaching portions.

According to this configuration, it is possible to change the position of the partition portion as appropriate such that it becomes possible to apply the coating liquid in accordance with coating conditions, such as adjusting the width of the coating film to be formed on the substrate.

### [EFFECTS OF THE INVENTION]

According to the slit die of the present invention, it is possible to make the width-direction shape of the coating film uniform, when the coating film is formed in a stripe pattern in the width direction.

### [BRIEF DESCRIPTION OF THE DRAWINGS]

[Figure 1] is a schematic diagram showing a coating device equipped with a slit die according to one embodiment of the present invention.
[Figure 2] is a diagram for explaining the slit die according to one embodiment of the present invention.
[Figure 3] is a diagram showing a coating film formed by the slit die according to one embodiment of the present invention.
[Figure 4] is a diagram for explaining a conventional slit die.
[Figure 5] is a diagram showing a coating film formed by a conventional slit die.

### [EMBODIMENTS TO CARRY OUT THE INVENTION]

A coating device according to one embodiment of the present invention will be described, with reference to the drawings. In the following description, the three axes of a Cartesian coordinate system are X, Y, and Z, wherein the horizontal directions are referred to as the X-axis direction and the Y-axis direction, and the direction perpendicular to the XY plane (i.e., the vertical direction) is referred to as the Z-axis direction.

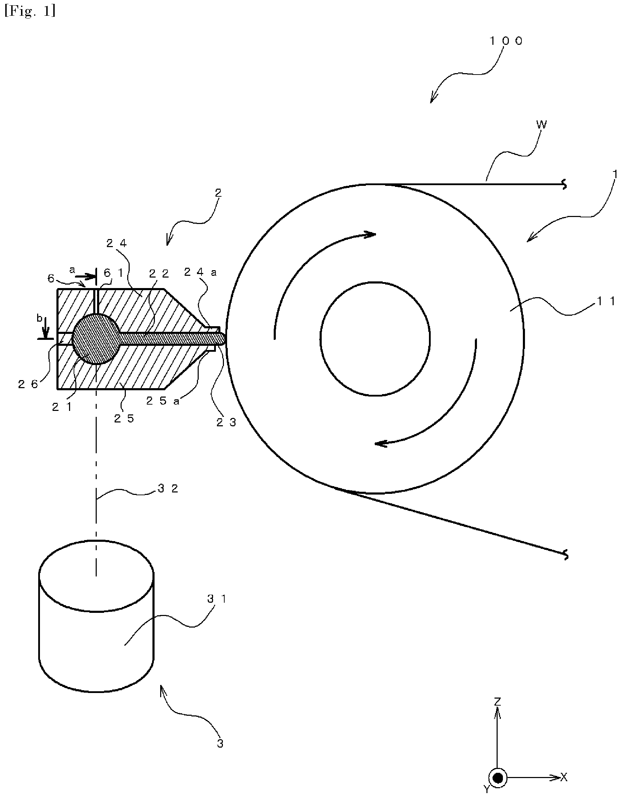

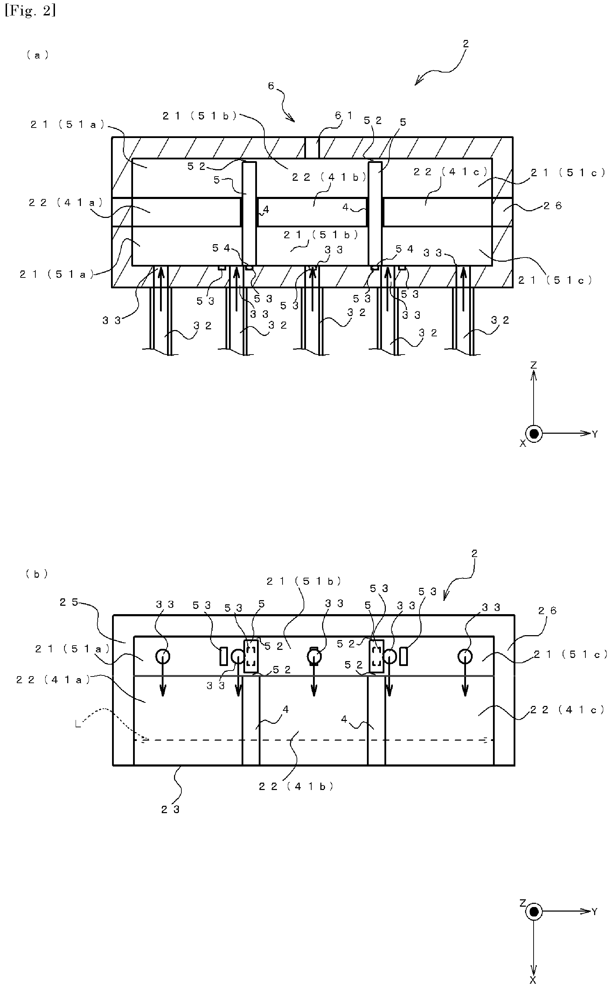

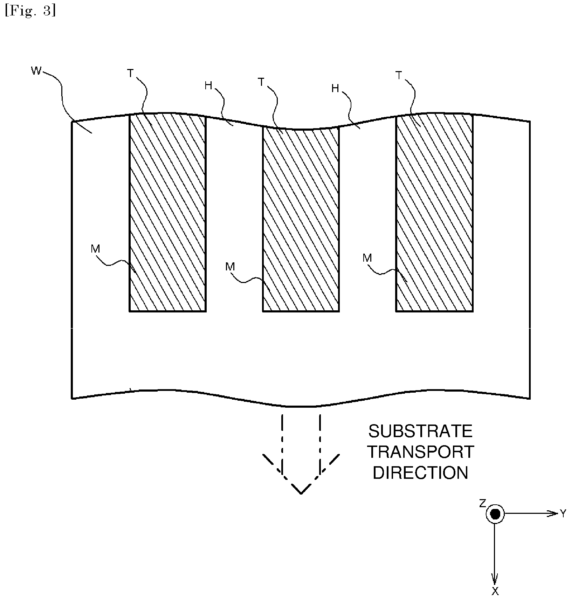

Figure 1 is a schematic diagram showing a coating device 100 equipped with a slit die 2 according to the present embodiment. Figure 2 is a diagram for explaining the slit die 2 according to the present embodiment; (a) is a cross-sectional view taken along the line indicated by arrow a in Figure 1, and (b) is a cross-sectional view taken along the line indicated by arrow b in Figure 1. Figure 3 is a diagram showing a coating film M formed by the slit die 2 according to the present embodiment.

As shown in Figure 1, the coating device 100 according to the present embodiment comprises a transport means 1 for transporting a substrate W, the slit die 2 for applying a coating liquid on the substrate W, and a supply means 3 for supplying the coating liquid to the slit die 2.

The coating device 100 in the present embodiment uses the slit die 2 to apply coating liquid on a prescribed surface of the substrate W, which is transported by the transport means 1, to form the coating film M (refer to Figure 3).

The substrate W in the present embodiment is a metal foil that will become a battery electrode plate of a battery, such as a lithium ion battery; aluminum foil, etc., is used when forming a positive electrode, and a copper foil, etc., is used when forming a negative electrode. This substrate W is a strip-shaped sheet that is elongated in one direction, and is transported by the transport means 1.

A coating liquid in the present embodiment is, for example, a slurry containing an active material, a binder, a conductive assistant, and a solvent, and is used as a material (so-called electrode material) of a battery electrode plate for a battery, such as a lithium ion battery. The coating film M is formed on the substrate W by applying this coating liquid to the substrate W.

The transport means 1 in the present embodiment is for transporting the substrate W which employs the roll-to-roll method in which the substrate W is transported by the rotation of a plurality of rollers. The transport speed of the substrate W by this transport means 1 is controlled by an undiagrammed control unit. The control unit is, for example, a general-purpose computer. In the present embodiment, only a coating roller 11 that guides the substrate W to the location where the coating liquid is applied is shown in Figure 1.

In addition, the coating roller 11 is disposed so as to face the slit die 2 and to be a prescribed distance away from a discharge port 23, described further below, at the time that the slit die 2 applies the coating liquid. Therefore, it is possible to transport the substrate W while maintaining a constant distance from the slit die 2.

The slit die 2 in the present embodiment is for applying a coating liquid on the substrate W that is transported to form the coating film M. The slit die 2 is formed elongated along the width direction of the substrate W (Y-axis direction in Figure 1). The above-mentioned coating roller 11 is disposed at a prescribed distance from a coating unit 2 such that the rotational axis direction of the coating roller 11 and the width direction of the coating unit 2 are parallel to each other. In the following description, the width direction of the substrate W is referred to as the width direction.

In addition, the slit die 2 of the present embodiment is configured by combining a first split body 24 having a tapered first lip 24a, as shown in Figure 1, and a second split body 25 having a tapered second lip 25a, with a shim plate 26 sandwiched therebetween.

Inside the slit die 2 are formed a manifold 21, composed of a space that is elongated in the width direction and that holds the coating liquid, and a slit 22 that is connected to this manifold 21 and that is wide in the width direction. The discharge port 23, which is the open end of the slit 22, is formed between the first lip 24a and the second lip 25a. That is, the first manifold 21 and the discharge port 23 are connected via the slit 22.

The manifold 21 in the present embodiment is formed in an essentially cylindrical shape extending in the width direction, as shown in Figures 1 and 2(a). Coating liquid is supplied to this manifold 21 by the supply means 3, described further below.

In addition, the dimension of the slit 22 that is connected to the manifold 21 is determined by the inner dimension L (refer to Figure 2(b)) of the shim plate 26. The slit die 2 applies, on the substrate W, coating liquid having essentially the same width-direction dimension as the dimension of the slit 22. The pressure inside the manifold 21 can be adjusted by changing the thickness of the shim plate 26, and the coating film M that has various thicknesses can be formed on the substrate W with this adjustment.

In addition, the discharge port 23 faces the coating roller 11 with the substrate W sandwiched therebetween. That is, the discharge port 23 faces the substrate W on the front surface side of the substrate W With these configurations, the slit die 2 discharges, onto the substrate W, the coating liquid held in the manifold 21 from the discharge port 23 via the slit 22, in a state in which the distance between the discharge port 23 and the substrate W is maintained constant.

The supply means 3 in the present embodiment is for supplying coating liquid to the slit die 2. The supply means 3 has a tank 31 for storing the coating liquid, a supply path 32 that connects the tank 31 to the slit die 2, a supply port 33 that connects the supply path 32 from outside of the slit die 2 to the manifold 21, and an undiagrammed pump that feeds the coating liquid, as shown in Figures 1 and 2(a).

In the present embodiment, a plurality of the supply ports 33 are formed at the bottom of the manifold 21, arranged in the width direction, as shown in Figures 2(a) and 2(b). The supply path 32 is connected to each of these supply ports 33. That is, the supply means 3 supplies the coating liquid to the manifold 21 from a plurality of locations. The supply path 32 that is connected to each of the supply ports 33 may be provided individually for each of the supply ports 33, or one supply path 32 extending from the tank 31 may branch out before reaching the supply port 33.

In addition, the pump is configured to be able to adjust the flow rate of the coating liquid to be fed to the supply port 33 via the supply path 32. In the present embodiment, this pump is provided to each of the supply paths 32 connected to each of the supply ports 33 so that the flow rate of the coating liquid to be fed from the tank 31 to each of the supply ports 33 can be adjusted. As a result, it is possible to adjust the flow rate of the coating liquid to be fed to the manifold 21 across the width direction.

In addition, the slit die 2 in the present embodiment forms the coating film M in a stripe pattern in the width direction. Forming the coating film M in a stripe pattern in the width direction here means to form the coating film M in the width direction of the substrate W (Y-axis direction in Figure 3) such that the substrate W has a plurality of coated areas T where the coating film M is formed, as shown in Figure 3, and uncoated areas N where the coating film M is not formed between the plurality of coated areas T.

In order to realize the foregoing, the slit die 2 in the present embodiment comprises a shim 4 that partitions the slit 22 into a plurality of spaces in the width direction, as shown in Figures 2(a) and 2(b).

As shown in Figure 2(b), the shim 4 in the present embodiment is a block that extends from the start end of the slit 22, which is the boundary between the manifold 21 and the slit 22, to the open end, and has the same thickness as the above-mentioned shim plate 26 in the height direction, as shown in Figure 2(a). In the present embodiment, an example in which two of the shims 4 are used will be described. These two shims 4 are sandwiched by the first split body 24 and the second split body 25 so as to be arranged in the width direction, thereby being fixed in a state of partitioning the slit 22 into a plurality of spaces in the width direction.

As a result, the space of the slit 22 is partitioned into a small slit 41a, a small slit 41b, and a small slit 41 c, as shown in Figures 2(a) and 2(b).

When the supply means 3 supplies the coating liquid to the manifold 21 in such a state, the coating liquid flows into each of the small slit 41a, the small slit 41b, and the small slit 41c, and the coating liquid is applied from the discharge ports 23, which are the open ends thereof. That is, the coating liquid is applied from where the shim 4 is not present, and the coating liquid is not applied from where the shim 4 is present. Therefore, it is possible to form the coating film M on the substrate W in a stripe pattern in the width direction.

The width of the coating film M can be adjusted by changing the width-direction dimension of the shim 4. That is, it is possible to adjust the widths of the coated areas T and the uncoated areas N in the width direction of the substrate W. In addition, the position where the shim 4 is fixed, that is, the position where the shim 4 is sandwiched between the first split body 24 and the second split body 25 may be changed to adjust the width of the coating film M. That is, it is possible to adjust the widths of the coated areas T and the uncoated areas N in the width direction of the substrate W.

With these configurations, the slit die 2 can form, on the substrate W, the coating film M in a stripe pattern in the width direction.

In addition, the slit die 2 in the present embodiment comprises the partition portion 5, which partitions the manifold 21 into a plurality of spaces in the width direction, as shown in Figures 2(a) and 2(b).

The partition portion 5 in the present embodiment is a block that is formed to match the shape of the manifold 21. As described above, the manifold 21 in the present embodiment is formed in an essentially cylindrical shape extending in the width direction. In order to partition this essentially cylindrical manifold 21 into a plurality of spaces in the width direction, the partition portion 5 is formed in an essentially columnar shape, and is disposed such that the outer circumferential surface of this column faces the inner circumferential surface of the manifold 21, as shown in Figures 2(a) and 2(b). The width-direction dimension of the partition portion 5 is formed to be smaller than, or the same as, the width-direction dimension of the above-mentioned shim 4.

The number and positions of the partition portions 5 to be disposed are linked to the number and positions of the shims 4 to be disposed. In the present embodiment, two of the partition portions 5 are disposed in the manifold 21. These two partition portions 5 are disposed so as to be arranged in the width direction of the manifold 21, as shown in Figures 2(a) and 2(b), thereby partitioning the space of the manifold 21 in the width direction into a small manifold 51a, a small manifold 51b, and a small manifold 51c.

In the present embodiment, as shown in Figures 2(a) and 2(b), the partition portion 5 is arranged to partition the manifold 21 such that one small manifold 51 is connected to one small slit 41. That is, the partition portion 5 is disposed so as to face the shim 4 in a direction (X-axis direction in Figure 2(a)) in which the coating liquid flows from the manifold 21 to the discharge port 23. When viewed from the direction of the discharge port 23, the partition portion 5 is preferably arranged such that the partition portion 5 is hidden by the shim 4. As a result, in the present embodiment, the small slit 41a and the small manifold 51a, the small slit 41b and the small manifold 51b, and the small slit 41c and the small manifold 51c, are respectively connected to each other. In addition, the partition portion 5 is disposed such that at least one of the supply ports 33 is located in each of the small manifolds 51.

In addition, the partition portion 5 in the present embodiment is formed so as to form a communication portion 52 that connects, in the width direction, the small manifolds 51 that are adjacent to each other, as shown in Figures 2(a) and 2(b). The communication portion 52 in the present embodiment is a gap, and is referred to as gap portion 52 in the description hereinbelow. Specifically, the partition portion 5 is formed in a shape in which the above-mentioned inner circumferential surface of the manifold 21 and a portion of the outer circumferential surface of the partition portion 5 face each other with a prescribed gap therebetween. As a result, the gap portion 52 is formed between the inner circumferential surface of the manifold 21 and a portion of the outer circumferential surface of the partition portion 5, and the adjacent small manifolds 51, that is, the small manifold 51a, the small manifold 51b, and the small manifold 51c are connected via the gap portion 52. A pump included in the supply means 3 is used to adjust the flow rate of the coating liquid that is supplied from the tank 31 to each of the supply ports 33 such that the flow rate is uniform for each of the small manifolds 51. That is, the amount of the coating liquid in each of the small manifolds 51 becomes uniform.

Here, the gap portion 52 is formed such that the pressure loss experienced by the coating liquid, which is supplied from the supply ports 33 to each of the small manifolds 51, when flowing from the small manifolds 51 to the adjacent small manifolds 51 via the gap portion 52 is greater than the pressure loss experienced by the coating liquid when flowing from the small manifolds 51 to the discharge port 23 via the small slits 41.

Specifically, at least the cross sectional area of the gap between the inner circumferential surface of the manifold 21 and the outer circumferential surface of the partition portion 5, which forms the gap portion 52, is set to be smaller than the cross sectional area of the small slit 41. As a result, it becomes difficult for the coating liquid to flow into the gap portion 52, and it becomes possible to prevent the coating liquid from moving between the adjacent small manifolds 51.

It is preferable for the dimension of the gap portion 52, that is, the distance between the inner circumferential surface of the manifold 21 and the outer circumferential surface of the partition portion 5, to be as small as possible; preferably, the dimension is such that the movement of the coating liquid between the adjacent small manifolds 51 is minimized while allowing the movement of air. More preferably, the dimension of the above-mentioned gap portion 52 is about 0.5-1.0 mm. Note that air here refers to atmospheric air, which enters the supply path 32 from an undiagrammed joint of the supply path 32 or an undiagrammed sliding member of the pump and is mixed into the manifold 21, before the coating liquid from the tank 31 reaches the manifold 21.

As a result of the gap portion 52 being formed in this manner, even though the partition portion 5 does not completely partition the small manifolds 51 from each other, it is possible to prevent the coating liquid from moving between the adjacent small manifolds 51, with the configuration described above. As a result, in the present embodiment, even in a state in which the gap portion 52 is formed, the partition portion 5 partitions the manifold 21 in the width direction into a plurality of the small manifolds 51.

In addition, the slit die 2 in the present embodiment is equipped with an exhaust means 6 for exhausting the air that is present in the manifold 21, as shown in Figures 1 and 2(a). As shown in Figure 2(a), the exhaust means 6 has at least one exhaust hole 61 that is provided on the upper surface of the manifold 21 and that exhausts the air present in the manifold 21 to the outside. The exhaust hole 61 is provided so as to communicate with any one of the plurality of small manifolds 51 that are partitioned by the partition portion 5.

As a result of the exhaust hole 61 being provided on the upper surface of the manifold 21, air that has moved to the upper surface of the manifold 21 due to buoyant force is exhausted to the outside.

Here, since the adjacent small manifolds 51 are connected to each other via the above-mentioned gap portion 52, the air that exists in the small manifolds 51 move between the adjacent small manifolds 51 and is exhausted from the exhaust hole 61. In addition, in the present embodiment, the partition portion 5 is formed so as to form the gap portion 52 near the upper surface of the manifold 21. As a result, it becomes easier to exhaust, from the exhaust hole 61 via the gap portion 52, the air that moves to the upper surface of the small manifolds 51 due to buoyant force.

The slit die 2 in the present embodiment is provided with a partition attaching portion 53 for attaching the partition portion 5, as shown in Figure 2(b). The partition attaching portion 53 in the present embodiment is a groove provided so as to be arranged on the bottom surface of the manifold 21 in the width direction.

Here, the outer circumferential surface of the partition portion 5 is provided with a protrusion 54 that fits into the partition attaching portion 53, as shown in Figures 2(a) and 2(b). It is possible to attach the partition portion 5 to the partition attaching portion 53 by fitting this protrusion 54 into the partition attaching portion 53. That is, the partition portion 35 is detachable.

When the first split body 24 and the second split body 25 sandwich the shim plate 26 and the shim 4, the protrusion 54 is fitted into any one of the plurality of partition attaching portions 53 in accordance with the arrangement of the shim 4 to attach the partition portion 5. It is thereby possible to attach the partition portion 5 to the manifold 21 in accordance with the arrangement of the shim 4.

According to the slit die 2 of the present embodiment, it is possible to make the width-direction shape of the coating film M more uniform than in the prior art, when the coating film M is formed in a stripe pattern in the width direction.

A specific explanation will be given. Conventionally, when forming a striped coating film on the substrate W in the width direction without partitioning the manifold 21 in the width direction, the coating liquid that is supplied to the manifold 910 from each of the plurality of supply ports 950 flows into each space of the slit 920 partitioned by the shims 940, and is discharged from the discharge port 930, as shown in Figures 4(a) and 4(b). Here, as shown in Figure 4(b), the coating liquid that is supplied from the supply port 950 located near the shim 940, from among the plurality of supply ports 950, flows in the width direction while avoiding the portion where the shim 940 is located.

This coating liquid that flows in the width direction and the coating liquid that is supplied from the other supply ports 950 and flows toward each space of the slit collides inside the manifold 910. As a result, the direction in which the coating liquid supplied from each of the supply ports 950 flows changes while flowing from the manifold 910 into the slit 920. As a result, variation occurs in the amount of coating liquid that flows into each of the spaces in the slit 920 partitioned by the shim 940.

As a result, when the coating liquid that flows into each of the spaces of the slit 920 partitioned by the shim 940 is discharged from the discharge port 930 and forms the coating film 970 on the substrate 960, variation occurs in the shape of the coating film 970 in the width direction, as shown in Figure 5.

In contrast, the slit die 2 in the present embodiment has the partition portion 5, and this partition portion 5 partitions the manifold 21 in the width direction such that one of the small manifolds 51 is connected to one of the small slits 41, formed by the slit 22 being partitioned in the width direction by the shim 4. As a result, it is possible to prevent the coating liquid supplied from each of the supply ports 33 from moving between the adjacent small manifolds 51, so it is possible to prevent the coating liquid that is supplied from the supply port 33 that is located near the shim 4 from avoiding the shim 4 and colliding with the coating liquid that is supplied from the other supply ports 33 and flows toward each of the small slits 22, as in the prior art.

As a result, compared to the conventional slit die 900, it is possible to prevent the direction in which the coating liquid supplied from each of the supply ports 35 flows from changing while flowing from the manifold 21 into each of the small slits 41. In addition, since the coating liquid flows from each of the small manifolds 51 into each of the small slits 41 so as to be uniform in the width direction of the substrate W, it is possible to suppress the width-direction variation in the coating liquid that is discharged from the discharge port 23 via each of the small slits 41. Accordingly, it is possible to make the width-direction shape of the coating film more uniform compared to conventional methods, when the coating film is formed in a stripe pattern in the width direction, as shown in Figure 3.

In addition, the partition portion 5 in the present embodiment is formed so as to form the gap portion 52 that connects, in the width direction, the small manifolds 51 that are adjacent to each other. The gap portion 52 is formed such that the pressure loss experienced by the coating liquid, which is supplied from the supply ports 33 to each of the small manifolds 51, when flowing from the small manifolds 51 to the adjacent small manifolds 51 via the gap portion 52 is greater than the pressure loss experienced by the coating liquid when flowing from the small manifolds 41 to the discharge port 23 via the small slits 41.

As a result, it becomes easier for the exhaust means 6 to exhaust the air present in the manifold 21 to the outside. Specifically, the air present in each of the small manifolds 51 can be moved between the adjacent small manifolds 51 via the gap portion 52. As a result, if one of the exhaust hole 61 of the exhaust means 6 is provided to any one of the plurality of small manifolds 51, the air that is present in each of the small manifolds 51 can be exhausted to the outside at once.

Additionally, in the present embodiment, the partition portion 5 is formed so as to form the gap portion 52 to be positioned near the upper surface of the manifold 21, and the exhaust hole 61 is provided on the upper surface of the manifold 21. Therefore, it becomes easier to move, via the gap portion 52, the air that moves to the upper surface of the small manifolds 51 due to buoyant force, so it becomes easier to exhaust the air that is present in each of the small manifolds 51 from the exhaust hole 61 to the outside.

In addition, the slit die 2 in the present embodiment has a plurality of the partition attaching portions 53 so as to be arranged in the width direction of the manifold, and protrusions 54 that fit into these partition attaching portions 53 are formed in the partition portion 5. Therefore, the partition portion 5 can be attached to / detached from the manifold 21, and it is possible to change the mounting position of the partition portion 5 in accordance with the position of the shim 4. As a result, it becomes possible to change the position of the partition portion 5 as appropriate so that it becomes possible to apply the coating liquid in accordance with coating conditions, such as adjusting the width of the coating film M to be formed on the substrate W.

Since the partition portion 5 is formed so as to form the gap portion 52, the partition portion 5 can be more readily attached to / detached from the manifold 21 than in a case where the gap portion 52 is not present.

Additionally, in the present embodiment, since a pump is provided in each of the supply paths 32 connected to each of the supply ports 33, even if there is a difference in the number of supply ports 33 arranged in each of the small manifolds 51 partitioned by the partition portion 5, it is possible to appropriately adjust the flow rate of the coating liquid that is supplied to each of the small manifolds 51.

An embodiment of the present invention was described in detail above with reference to the drawings, but the configurations in the embodiment and combinations thereof are merely examples, and additions, omissions, substitutions, and other modifications can be made without departing from the scope of the invention. For example, in the embodiment described above, an example was presented in which the slit 22 is partitioned by two of the shims 4, but the invention is not limited thereto. The same number of the partition portions 5 as the shims 4 are arranged in the manifold 21.

In addition, in the present embodiment, the partition portion 5 is formed so as to form the gap portion 52, but the partition portion 5 may be formed so as not to form the gap portion 52. That is, the outer circumferential surface of the partition portion 5 and the inner circumferential surface of the manifold 21 may be in close contact with each other. In this case, one of the exhaust holes 61 may be provided to each of the small manifolds 51 partitioned by the partition portion 5.

In addition, in the present embodiment, it is described that the dimension of the gap portion 52, which is the distance between the inner circumferential surface of the manifold 21 and the outer circumferential surface of the partition portion 5, is about 0.5-1.0 mm, but no limitation is imposed thereby; the dimension may be any dimension as long as air can move between the small manifolds 51. That is, it suffices if the dimension of the gap portion 52 is sufficiently large to allow air to pass through.

In addition, in the present embodiment, an example was presented in which the communication portion 52 is the gap portion 52, but the invention is not limited thereto. For example, the communication portion may be a through-hole formed in a part of the partition portion 5 so as to penetrate in the width direction. In this case, the cross sectional area of the through-hole is configured to be smaller than the cross sectional area of the slit 22. That is, the through-hole is formed such that the pressure loss experienced by the coating liquid, which is supplied from the supply ports 33 to each of the small manifolds 51, when flowing from the small manifolds 51 to the adjacent small manifolds 51 via the through-hole is greater than the pressure loss experienced by the coating liquid when flowing from the small manifolds 51 to the discharge port 23 via the small slits 41. In addition, it is preferable for this through-hole to be formed near the upper surface of the manifold 21.

### [DESCRIPTIONS OF THE REFERENCE SYMBOLS]

100 Coating device
1 Transport means
11 Coating roller
2 Slit die
21 Manifold
22 Slit
23 Discharge port
24 First split body
24a First lip
25 Second split body
25a Second lip
26 Shim body
3 Supply means
31 Tank
32 Supply path
33 Supply port
4 Shim
41 Small slit
41a Small slit
41b Small slit
41c Small slit
5 Partition portion
51 Small manifold
51a Small manifold
51b Small manifold
51c Small manifold
52 Communication portion (gap portion)
53 Partition attaching portion
54 Protrusion
6 Exhaust means
61 Exhaust hole
W Substrate
M Coating film
T Coated area
N Uncoated area

## Claims

1. A slit die configured to apply a coating liquid on a substrate, the slit die comprising:
a manifold that is formed elongated in a width direction of the substrate and is a space that is configured to hold the coating liquid;
a plurality of supply ports that are provided in the manifold so as to be arranged in the width direction and are configured to supply the coating liquid to the manifold;
a slit that is connected to the manifold and is elongated in the width direction;
a discharge port that is configured to discharge the coating liquid from the manifold via the slit;
a shim that partitions the slit into a plurality of spaces in the width direction and forms small slits; and
a partition portion that partitions the manifold into a plurality of spaces in the width direction and forms small manifolds,
the partition portion being disposed at a position that partitions the manifold such that at least one of the supply ports is located in each small manifold, and one of the small manifolds connects to one of the small slits.

2. The slit die according to claim 1, wherein
the partition portion is formed so as to form a communication portion that connects, in the width direction, each of the small manifolds that are adjacent to each other, and
the communication portion is formed such that pressure loss experienced by the coating liquid, which is supplied from the supply ports to each of the small manifolds, when flowing from the small manifolds to the adjacent small manifolds via the communication portion is greater than the pressure loss experienced by the coating liquid when flowing from the small manifolds to the discharge port via the small slits.

3. The slit die according to claim 2, wherein
at least one of the small manifolds is provided with an exhaust means for exhausting air that is present in the manifold.

4. The slit die according to any one of claims 1 to 3, wherein
the manifold is provided with a plurality of partition attaching portions for attaching the partition portion, and
the partition portion is formed so as to be detachable with respect to each of the partition attaching portions.
